Europäisches Patentamt

European Patent Office

Office européen des brevets

(11) Publication number: **0 126 050**

**A1**

(12) # EUROPEAN PATENT APPLICATION

(21) Application number: **84850139.1**

(22) Date of filing: **02.05.84**

(51) Int. Cl.³: **C 01 F 11/46**

(30) Priority: **06.05.83 SE 8302590**

(43) Date of publication of application:
**21.11.84 Bulletin 84/47**

(84) Designated Contracting States:
**AT BE CH DE FR GB IT LI LU NL SE**

(71) Applicant: **Boliden Aktiebolag**
**Box 5508**
**S-114 85 Stockholm(SE)**

(72) Inventor: **Kullenberg, Nils Eric Ferdinand**
**Jonstorpsvägen 96**
**S-263 00 Höganäs(SE)**

(72) Inventor: **Persson, Lars-Erik Herbert**
**Alegatan 26**
**S-252 60 Helsingborg(SE)**

(74) Representative: **Inger, Lars Ulf Bosson et al,**
**Boliden AB Patent & Trade Marks Box 5508**
**S-114 85 Stockholm(SE)**

(54) A method for producing fibrous gypsum.

(57) The present invention relates to acicular gypsum crystals, so-called fibrous gypsum, the crystals containing two waters of crystallization. The invention also relates to a method for the manufacture of such crystals, in which gypsum is dissolved to saturation in a sulphuric-acid solution containing 5-15% $H_2SO_4$ at a temperature of 70-100°C, whereafter the saturated solution is permitted to cool, thereby to crystallize out acicular gypsum crystals of dihydrate form.

The resultant crystals, fibrous gypsum, can be used, *inter alia*, in the manufacture of lightweight gypsum products, such as fire-resistant insulating material.

EP 0 126 050 A1

Croydon Printing Company Ltd.

# A METHOD FOR PRODUCING FIBROUS GYPSUM

## DESCRIPTION

### Technical field

The present invention relates to a novel acicular gypsum crystal and to a method for producing acicular gypsum crystals, so-called fibrous gypsum, having a length which is from 10-1000 times the thickness, by dissolving and transforming calcium sulphate ($CaSO_4 \cdot \frac{1}{2} H_2O$, $CaSO_4 \cdot 2H_2O$).

The object of the present invention is to provide a method of producing acicular gypsum crystals having two waters of crystallization and which can be suitably admixed with cellulose fibre material, building materials, asbestos-fibre substitutes etc.

### Background art

Gypsum has been the subject of research and development for a great many years and many attempts have been made to find a use for gypsum within various fields. In this respect, attempts have also been made to find a use for the large quantities of gypsum precipitates formed in industry, and particularly those formed when producing phosphoric acid in accordance with the wet process. Gypsum is also precipitated in other processes, within the so-called heavy inorganic chemical industry. Because present day gypsum precipitates contain undesirable substances, they cannot be dumped freely into the sea, but must first be limed and then dumped on land, therewith incurring heavy handling costs.

Gypsum is today used by the building-material industry, and is mixed with cement, or used to produce gypsum panels and sheeting, which is used as building materials in the construction of buildings, and in particular in the construction of internal walls.

It has also been proposed to admix gypsum with cellulose fibres, in order to reduce the need for wood raw-materials in the paper and board manufacturing industries.

When manufacturing building board, and also when admixing gypsum with cellulose fibres, it is desirable to have the gypsum in fibre form, i.e. in the form of acicular crystals, in order to improve thereby the manageability and mechanical strength of the gypsum.

Various methods have previously been proposed for manufacturing so-called fibrous gypsum. For example, there is described in DE-A1- 2 854 722, a method for producing calcium sulphate-α-hemihydrate from, inter alia, calcium sulphate dihydrate, calcium sulphate-β-hemihydrate or calcium sulphate-anhydrite, in which method an aqueous slurry of such a starting material is subjected to a hydrothermal reaction, to form acicular and/or particulate gypsum crystals. To this end, a powderous inorganic substance, such as talc, silica, calcium carbonate, calcium sulphate anhydrite in soluble form, or calcium sulphate hemihydrate, is added to the slurry. The resultant fibrous calcium sulphate-α-hemihydrate can be transformed to anhydrite form by calcination, whereupon the resultant acicular crystals are reformed to particulate gypsum.

The reaction can be carried out in an autoclave, by heating an aqueous slurry to 100-180°C for 1-90 minutes, normally to 120-135°C for from 5-10 minutes.

The described method is heat demanding, and it is not always that a pure product is obtained, since the product may contain silica, talc, clay, etc.

In DE-A1- 26 14 651; DE-A1- 26 59 860 and DE-A1- 26 59 861 there is described a method of producing fibrous gypsum in the form of an α-hemihydrate gypsum or anhydrite gypsum, starting from calcium sulphite which is oxidized to calcium sulphate-α-hemihydrate at elevated temperatures and pressures over a considerable period of time (130°C; 2 kp/cm$^2$; 1 hour). Calcination at 200-800°c results in anhydrite gypsum. This method also consumes relatively large quantities of energy and is demanding on the apparatus used.

All of the known cited methods are relatively complicated, and none of the methods enables a pure gypsum product to be produced.

Disclosure of the present invention

It has now surprisingly been found possible to obtain fibrous gypsum in dihydrate form in accordance with the present invention, which is characterized by dissolving gypsum, irrespective of its water-of-crystallization content, in 5-15%-$H_2SO_4$ at 70-100°C with a dry solids content of an ingoing slurry of 50-200 g/l, whereafter fibrous gypsum in dihydrate form is permitted to crystallize out as the solution cools to room temperature.

The solution is preferably prepared at 85-100°C, in a sulphuric-acid solution which preferably contains from 9 to 11% $H_2SO_4$.

Further characteristic features of the invention are set forth in the following claims.

The gypsum used to produce the fibrous gypsum may be gypsum obtained when manufacturing phosphoric acid in accordance with the wet process, or gypsum obtained in flue-gas purification plants, or from pure, natural gypsum, when a highly pure product is required.

Gypsum obtained from phosphoric-acid manufacturing processes often contains solid impurities deriving from the apatite or the phosphate used. These impurities can be readily separated from the gypsum solution.

The present invention provides an acicular dihydrate crystal, dihydrate fibrous gypsum, the length of which crystals are from 10-100 times their thickness, normally 10-100 /um x 1/um.

The resultant product is suited for use in the manufacture of products where a self-binding structure is desired, for example gypsum sheeting, paper fillers, asbestos substitutes and the like.

The fibrous gypsum can also be produced continuously, in a manner hereafter described.

The invention will now be described in more detail with reference to a number of examples.

Example 1

Sulphuric acid solutions of varying $H_2SO_4$-concentrations were saturated with dihydrate gypsum at 85°C. The undissolved gypsum was filtered off and the clear solutions were allowed to cool to 20°C over 24 hours, therewith to crystallize out acicular gypsum. While cooling the solutions were gently agitated with such a speed as to allow maximum crystal growth.

The result obtained with respect to the quantity of crystallized fibrous gypsum and the residual calcium content in the filtrate is given in Table 1 below.

Table 1

| $H_2SO_4$-concentrate % | Amount of crystallized dihydrate fibre gypsum g/l | Residual content Ca in filtrate g/l |
|---|---|---|
| 6.2 | 7.7 | 1.14 |
| 7.0 | 7.7 | 1.07 |
| 7.8 | 8.3 | 0.91 |
| 9.3 | 8.3 | 0.86 |
| 10.0 | 9.4 | 0.85 |
| 11.3 | 9.1 | 0.78 |

The best yield was obtained between 10-11% $H_2SO_4$.

In order to control the growth of fibrous gypsum, particularly in order to achieve long fibers, the agitation speed must not be too high as then the crystals are broken.

5

Fibrous gypsum can also be added as crystallization seeds to obtain maximum length of the fibers.

**Example 2**

Sulphuric acid solutions containing 10% $H_2SO_4$ were saturated with dihydrate gypsum at mutually different temperatures. The undissolved gypsum was filtered off and fibrous gypsum was crystallized from the clear solutions at 20°C. The result obtained with respect to the amount of gypsum crystallized at different solution temperatures is set forth in Table 2.

Table 2

| Dissolution temperature °C | Amount of dihydrate - gypsum crystallized out g/l |
|---|---|
| 35 | 0 |
| 50 | 1 |
| 70 | 5.0 |
| 85 | 9.4 |
| 95 | 12.8 |

The yield increases considerably with increrasing temperature.

**Example 3**

Sulphuric acid solution containing 10% $H_2SO_4$ was saturated with ɑ-hemihydrate gypsum at 85°C. The undissolved gypsum was filtered off and, subsequent to cooling the clear solution to 20°C, acicular dihydrate gypsum was crystallized out. The yield was 12 g/l of dihydrate fibrous gypsum. The increased yield compared with Example 1 above (9.4 g/l) is due to the fact that the sulphuric acid solution becomes saturated with $Ca^{2+}$-ions when hemigypsum is dissolved therein. This saturation, however, is limited in time, and hence the gypsum must dissolve rapidly. In order to obtain an elevated yield, the time taken to dissolve the gypsum should be less than 5 minutes.

6

## Example 4

Continuous manufacture of dihydrate fibrous gypsum.

Dihydrate fibrous gypsum was produced continuously in a series of vessels equipped with agitators, each vessel having a volumetric capacity of 2.5 litres. Dry hemihydrate gypsum was dissolved in vessel 1 in 10% $H_2SO_4$-solution, which comprised a return product from a subsequent sedimentation apparatus and from a subsequent filtration apparatus. As will be seen from Table 3 below, dissolution of the gypsum was effected at mutually different temperatures and with mutually different amounts of gypsum per minute. The resultant suspension was transferred to a vessel 2, via a spillway. The suspension was then passed from vessel 2 to a vessel 3, also via a spillway, and from vessel 3 to a vessel 4, also via a spillway. The crystal solution, which then comprised dihydrate fibrous gypsum, was transferred from the vessel 4 to a settling tank, from which sulphuric acid (6 l/h) was returned to the vessel 1. Before returning the sulphuric acid, however, it was diluted with water; this was done because the acid becomes concentrated when transforming gypsum from hemihydrate to dihydrate form.

The sedimented fibrous gypsum product was transferred to a filtering apparatus, in which sulphuric-acid residues were filtered off and returned to vessel 1 (1 l/h). The filter cake, which comprised dihydrate fibrous gypsum, was washed with an organic solvent and dried.

Table 3

| Test | Input gypsum g/min | D.S.*-content of suspension | Temperatures °C in vessel | | | |
|------|------|------|------|------|------|------|
| | | % | 1 | 2 | 3 | 4 |
| 1 | 3.0 | 8.5 | 55 | 53 | 52 | 51 |
| 2 | 3.0 | 8.0 | 60 | 58 | 56 | 54 |
| 3 | 5.0 | 13.6 | 60 | 58 | 56 | 54 |
| 4 | 3.0 | 11.8 | 59 | 48 | 46 | 40 |
| 5 | 2.0 | 5.6 | 59 | 48 | 46 | 40 |
| 6 | 2.0 | 4.7 | 59 | 48 | 46 | 40 |

* D.S. = Dry substance.

7

The tests are not optimated with respect to temperature gradient. The highest yields in the above series, however, were obtained in tests 4-6, which implies that in order to obtain higher yields cooling must be more extensive.

The acicular crystals produced were found particularly suitable for use in the manufacture of gypsum sheeting, wall-cladding materials, gypsum and wood-fibre panels, and gypsum and glass-wool panels. In addition to the building units obtained being lighter in weight, they were also fire resistant, and could be readily drilled and screwed.

## CLAIMS

1. A method for producing acicular gypsum crystals comprising calcium sulphate dihydrate, comprising dissolving calcium sulphate of hemihydrate and/or dihydrate form to saturation in a sulphuric-acid solution containing 5-15% $H_2SO_4$ at a temperature of 70-100°C; removing any undissolved substances from the solution; and permitting the saturated solution to cool to ambient temperature during crystallization of acicular calcium sulphate crystals containing two waters of crystallization, and by isolating, washing and drying said crystals.

2. A method according to Claim 1, characterized in that the sulphuric-acid solution contains 9-11% $H_2SO_4$.

3. A method according to Claim 2, characterized in that the dissolution temperature is 85-100°C.

0126050

European Patent
Office

**EUROPEAN SEARCH REPORT**

Application number

EP 84 85 0139.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 849 313 (CERTAIN-TEED CORP.)<br>--- | | C 01 F 11/46 |
| A | DE-C-2 659 860 (HYOGO PREFECTORAL GOVERNMENT)<br>--- | | |
| X | EP-A-0 012 488 (STAMICARBON)<br>*Page 2, lines 20-26*<br>--- | 1 | |
| X | EP-A-0 044 120 (STAMICARBON)<br>*Claims* | 1 | |

**TECHNICAL FIELDS
SEARCHED (Int. Cl. ³)**

C 01 F
C 04 B
C 09 C
D 01 F

The present search report has been drawn up for all claims

| Place of search | Date of completion of the search | Examiner |
|---|---|---|
| STOCKHOLM | 04-07-1984 | LUNDELL B-M. |